(19) **Europäisches Patentamt / European Patent Office / Office européen des brevets**

(11) **EP 3 006 301 B1**

(12) **EUROPEAN PATENT SPECIFICATION**

(45) Date of publication and mention
of the grant of the patent:
**24.06.2020 Bulletin 2020/26**

(21) Application number: **14803604.9**

(22) Date of filing: **29.05.2014**

(51) Int Cl.:
**B61K 13/00** *(2006.01)*     **G01M 17/007** *(2006.01)*
**G01M 17/08** *(2006.01)*     **G08B 21/00** *(2006.01)*
**G08B 31/00** *(2006.01)*

(86) International application number:
**PCT/JP2014/064345**

(87) International publication number:
**WO 2014/192897 (04.12.2014 Gazette 2014/49)**

(54) **DERAILMENT SIGN DETECTION SYSTEM AND DERAILMENT SIGN DETECTION METHOD**

SYSTEM ZUR ERKENNUNG VON ZEICHEN FÜR ENTGLEISUNGSGEFAHR UND VERFAHREN ZUR ERKENNUNG VON ZEICHEN FÜR ENTGLEISUNGSGEFAHR

SYSTÈME DE DÉTECTION DE SIGNE DE DÉRAILLEMENT ET PROCÉDÉ DE DÉTECTION DE SIGNE DE DÉRAILLEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2013 JP 2013113265**

(43) Date of publication of application:
**13.04.2016 Bulletin 2016/15**

(73) Proprietors:
• **Akebono Brake Industry Co., Ltd.**
  **Tokyo 103-8534 (JP)**
• **The University of Tokyo**
  **Tokyo 113-8654 (JP)**
• **West Japan Railway Company**
  **Osaka 530-8341 (JP)**

(72) Inventors:
• **SUDA, Yoshihiro**
  **Tokyo 113-8654 (JP)**
• **AKI, Masahiko**
  **Tokyo 113-8654 (JP)**
• **SAKAMOTO, Masaya**
  **Tokyo 113-8654 (JP)**
• **YANO, Hidemi**
  **Osaka-shi**
  **Osaka 530-8341 (JP)**
• **KODAMA, Yoshinori**
  **Osaka-shi**
  **Osaka 530-8341 (JP)**

• **TANIMOTO, Atsushi**
  **Osaka-shi**
  **Osaka 530-8341 (JP)**
• **KOGA, Shinichirou**
  **Osaka-shi**
  **Osaka 530-8341 (JP)**
• **KAWANABE, Tetsuya**
  **Tokyo 103-8534 (JP)**
• **MASHIKO, Minoru**
  **Tokyo 103-8534 (JP)**
• **OKUBO, Satomi**
  **Tokyo 103-8534 (JP)**
• **KUNIMI, Takashi**
  **Tokyo 103-8534 (JP)**
• **KOBAYASHI, Kazuhiro**
  **Tokyo 103-8534 (JP)**

(74) Representative: **Grünecker Patent- und Rechtsanwälte**
**PartG mbB**
**Leopoldstraße 4**
**80802 München (DE)**

(56) References cited:
WO-A1-2010/064453     JP-A- H10 271 604
JP-A- 2000 006 807     JP-A- 2004 090 848
JP-A- 2004 255 979     JP-A- 2011 245 917
US-A1- 2002 077 733    US-A1- 2008 156 944

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a derailment sign detection system, and a derailment sign detection method.

Background Art

As a technology for detecting a derailment sign of a railway train, the technology described in Patent Document 1 is available. The technology described in Patent Document 1 is a technology proposed by the inventors of the present invention in which the pitch angular velocity and the roll angular velocity of a traveling bogie is detected using a sensor installed on the bogie frame and it is determined that a derailment sign is present under the condition that the detected pitch angular velocity of the bogie or the integrated value of the pitch angular velocity of the bogie becomes larger than a preset threshold value and under the condition that the detected roll angular velocity of the bogie or the integrated value of the roll angular velocity of the bogie becomes larger than a preset threshold value.
A derailment sign detection system having a control unit with which a certain angular velocity may be controlled is for instance known from WO 2010/064453 A1. Moreover, JP 2004 255979 A discloses that the values of operation are compared with the measured values of a gyroscope.

Citation List

Patent Document

Patent Document 1: WO 2010/064453

Summary of Invention

Technical Problem

With the above-mentioned technology described in Patent Document 1, a dangerous state can be grasped beforehand, whereby the safety during the traveling of a train can be improved. Furthermore, the derailment of the train can be prevented during traveling at low speed, whereby the breakage of the train and railway tracks can be prevented. On the other hand, as a result of further analysis of the past accident investigations, it has been confirmed that the time from the start of the so-called flange climb, i.e., a derailment sign, to a derailment is shorter than the time that is conventionally assumed to be required.
The present invention is made in consideration of the above-mentioned problems, and an object of the present invention is to provide a technology capable of determining the presence of a derailment sign earlier than ever.

Solution to Problem

In the present invention, attention is paid to the roll angular velocity of a traveling bogie and the presence of a derailment sign is determined on the basis of the prediction value of the roll angular velocity to solve the above-mentioned problems.
In particular, the inventive derailment sign detection system has the features defined in claim 1.
In the present invention, the prediction value of the roll angular velocity is calculated and it is determined whether a derailment sign of the train is present on the basis of the prediction value of the roll angular velocity, whereby the time until the roll angular velocity exceeds the preset threshold value can be made shorter than ever. Hence, the presence of the derailment sign can be determined earlier. As a result, a dangerous state can be grasped earlier beforehand, whereby the safety during the traveling of the train can be improved. Furthermore, the derailment of the train can be prevented, and the breakage of the train and the railway tracks can be prevented.
For example, in the technology described in Patent Document 1, it is determined that a derailment sign is present under the condition that the pitch angular velocity of the bogie or the integrated value of the pitch angular velocity of the bogie becomes larger than a preset threshold value corresponding thereto and under the condition that the detected roll angular velocity of the bogie or the integrated value of the roll angular velocity of the bogie becomes larger than a preset threshold value corresponding thereto. In addition, time T1 until the detected roll angular velocity of the bogie or the integrated value of the roll angular velocity of the bogie becomes larger than the corresponding preset threshold value is longer than time T2 until the pitch angular velocity of the bogie or the integrated value of the pitch angular velocity of the bogie becomes larger than the corresponding preset threshold value (T1 > T2). In the present invention, attention is paid to the roll angular velocity that requires a relatively longer time for determination, and the prediction value of the roll angular velocity is used instead of the measured roll angular velocity so that the time until the roll angular velocity exceeds the preset threshold value can be made shorter than ever.

The preset threshold value can be calculated by an experiment or a simulation in which the traveling speed of the train and the attribute parameters of the train have been set appropriately. The derailment sign is transmitted by sound or display, for example. Upon determining that a derailment sign is present, the control device may start a sprinkling device to sprinkle water to the contact portion between the rail and the flange of the wheel and to reduce the friction coefficient. As a result, the train can be made to return to the rails and can be prevented from being derailed. Alternatively, the control device may stop the train.

In particular, the control device calculates a change amount of the roll angular velocity in an inclination measurement time, and may calculate the prediction value of the roll angular velocity after the lapse of the prediction time on an assumption that a change in the roll angular velocity is maintained after the lapse of the prediction time. Hence, it is possible to determine the presence of a derailment sign at a time earlier than the time when the roll angular velocity actually exceeds the preset threshold value corresponding thereto.

Furthermore, it is preferable that the prediction time and the inclination measurement time should be set based on a time required until the pitch angular velocity exceeds the preset threshold value of the pitch angular velocity. The time required until the pitch angular velocity exceeds the preset threshold value of the pitch angular velocity can be calculated by an experiment or a simulation in which the traveling speed of the train and the attribute parameters of the train have been set appropriately. It is preferable that the prediction time should be set so that the difference between the prediction time and the time required until the pitch angular velocity exceeds the preset threshold value of the pitch angular velocity.

Moreover, the control device can make the storage device store the pitch angular velocity detected by the detection section, can calculate the prediction value of the pitch angular velocity after the lapse of the prediction time based on a history of the pitch angular velocity, and can determine that the derailment sign of the train is present in a case that the prediction value of the pitch angular velocity and the prediction value of the roll angular velocity exceed the preset threshold values respectively corresponding thereto.

Moreover, a derailment sign detection method is provided, which has the features defined in claim 4.

Besides, the present invention may be specified as a derailment sign detection method to be executed by the above-mentioned derailment sign detection system or control device. For example, the present invention is a derailment sign detection method in which a computer executes a process including:

a prediction value calculating step of making a storage device store a roll angular velocity of a bogie detected by a detection section which is provided in a train and detects a pitch angular velocity and the roll angular velocity of the train on traveling, and calculating a prediction value of the roll angular velocity after a lapse of a prediction time based on a history of the roll angular velocity;

a sign determination step of determining that a derailment sign of the train is present in a case that the pitch angular velocity of the bogie detected by the detection section and the prediction value of the roll angular velocity calculated at the prediction value calculating step exceed preset threshold values respectively corresponding thereto; and

a transmitting step of transmitting the derailment sign to an outside in a case that it is determined that the derailment sign is present at the sign determination step.

What's more, the present invention may be specified as a derailment sign detection program capable of being executed by the above-mentioned derailment sign detection system or control device. For example, the present invention is a derailment sign detection program for making a computer execute a process including:

a prediction value calculating step of making a storage device store a roll

Advantageous Effect of Invention

The present invention can provide a technology capable of determining the presence of a derailment sign earlier than ever.

Brief Description of Drawings

FIG. 1A is a side view showing a train;
FIG. 1B is a view showing a general configuration of a derailment sign detection system according to an embodiment;

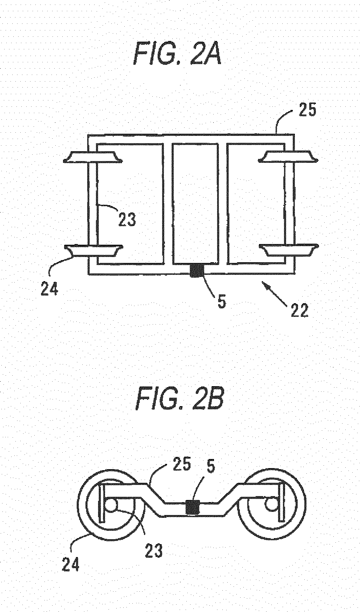

FIG. 2A is a plan view showing an installation example of a sensor in the derailment sign detection system according to the embodiment;

FIG. 2B is a side view showing the installation example of the sensor in the derailment sign detection system according to the embodiment;

FIG. 3 shows an algorithm for derailment sign detection;

FIG. 4 shows a flow of a derailment sign detection determination process according to the embodiment;

FIG. 5 shows an example of a graph illustrating the relationship between a change amount and time;

FIG. 6 shows an example of a database of threshold values;

FIG. 7 shows an example of a prediction effect in the movement average of roll angular velocity;

FIG. 8 shows an example of a prediction effect in pitch angular velocity;

FIG. 9 shows parameter values for a simulation;

FIG. 10 shows verification result (1) of detection time;

FIG. 11 shows verification result (2) of detection time;

FIG. 12 shows verification result (3) of detection time;

FIG. 13 shows verification result (4) of detection time;

FIG. 14 shows verification result (5) of detection time;

FIG. 15 shows verification result (6) of detection time;

FIG. 16 shows verification result (7) of detection time;

FIG. 17 shows verification result (8) of detection time;

FIG. 18 shows verification result (9) of detection time; and

FIG. 19 shows verification result (10) of detection time.

Description of Embodiment

Next, an embodiment according to the present invention will be described on the basis of the drawings. However, the following descriptions are only examples and the present invention is not limited to these.

<Embodiment>

«Configuration»

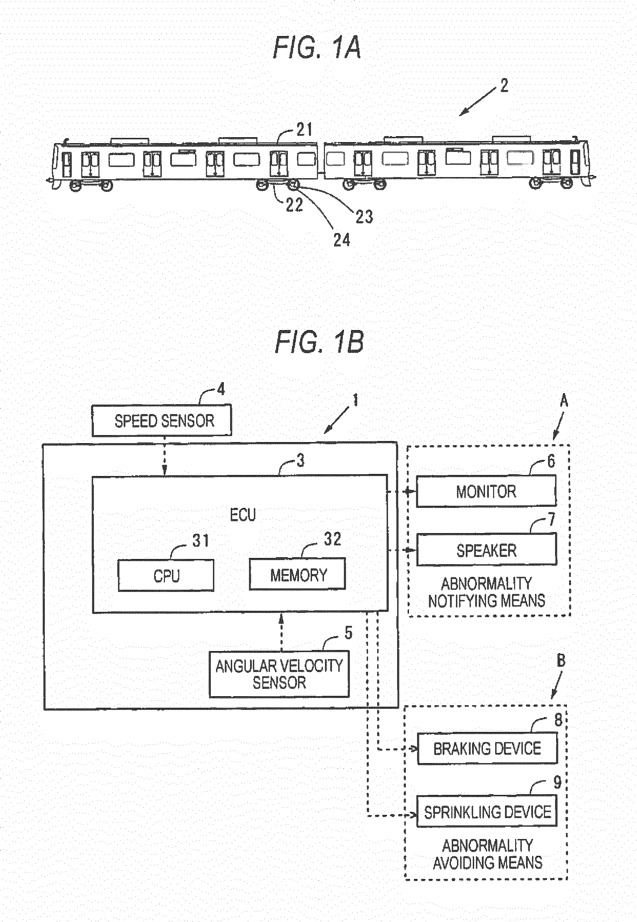

As shown in FIGS. 1A and 1B, a derailment sign detection system 1 according to an embodiment is a system composed of various electronic apparatuses and various sensors provided in a train 2, and the system is equipped with an ECU 3, a speed sensor 4 and an angular velocity sensor 5. The train 2 is equipped with vehicle bodies 21 and bogies 22 connected to the lower sections of the vehicle bodies 21 to support the vehicle bodies 21. The bogie 22 is equipped with a bogie frame (not shown in FIG. 1A). In the bogie frame, axles 23 are provided so as to be extended across the bogie frame and wheels 24 making contact with rails are connected to both ends of each axle 23. The derailment sign detection system 1 may be configured so as to further include at least an abnormality notifying means A (a monitor 6, a speaker 7) or an abnormality avoiding means B (a braking device 8, a water sprinkling device 9).

The ECU (Electronic Control Unit) 3 corresponds to a control device according to the present invention and is equipped with a CPU (Central Processing Unit) 31 and a memory 32. The ECU 3 is connected to the speed sensor 4, the angular velocity sensor 5, the abnormality notifying means A (the monitor 6, the speaker 7) and the abnormality avoiding means B (the braking device 8, the water sprinkling device 9). The CPU 31 calculates the prediction value of a roll angular velocity and determines whether a derailment sign of the train is present, for example, according to a program stored in the memory 32. Furthermore, the CPU 31 controls the abnormality notifying means A (the monitor 6, the speaker 7) and the abnormality avoiding means B (the braking device 8, the water sprinkling device 9), for example. The process to be executed by the ECU 3 will be described later in detail.

The speed sensor 4 detects the traveling speed of the train 2. The speed sensor 4 is provided, for example, on the axle 23, detects the number of revolutions of the wheel 24 per unit time and outputs the number of revolutions to the ECU 3, thereby outputting the traveling speed of the train 2 to the ECU 3.

The angular velocity sensor 5 is provided on the bogie frame 25 of the bogie 22 at a nearly central section in the front-rear direction of the train 2 and on a side section in the width direction of the train 2 and detects a pitch angular velocity and a roll angular velocity. The pitch angular velocity is the angular velocity of the pitch (the rotation (or inclination) around an axis in the width direction of the train), and the roll angular velocity is the angular velocity of the roll (the rotation (or inclination) around an axis in the front-rear direction of the train). An existing sensor, such as a gyroscope, can be used appropriately for the angular velocity sensor 5.

When the ECU 3 determines that a derailment sign is present, the monitor 6 is controlled by the ECU 3 and displays a derailment sign detection state. The monitor 6 is an example of an output section of the present invention and can be disposed, for example, in the vicinity of the driver seat of the train 2.

When the ECU 3 determines that a derailment sign is present, the speaker 7 outputs a derailment sign detection state as sound under the control of the ECU 3. The speaker 7 is an example of the output section of the present invention and can be disposed, for example, in the vicinity of the driver seat of the train 2.

The sprinkling device 9 is controlled by the ECU 3, and, for example, when a derailment sign is detected, the sprinkling device sprinkles water to the contact portion between the rail and the flange of the wheel to reduce the friction coefficient, thereby to make the derailed train 2 return to the rails. Alternatively, the braking device 8 is controlled by the ECU 3 to stop the train.

<<Derailment sign determination process>>

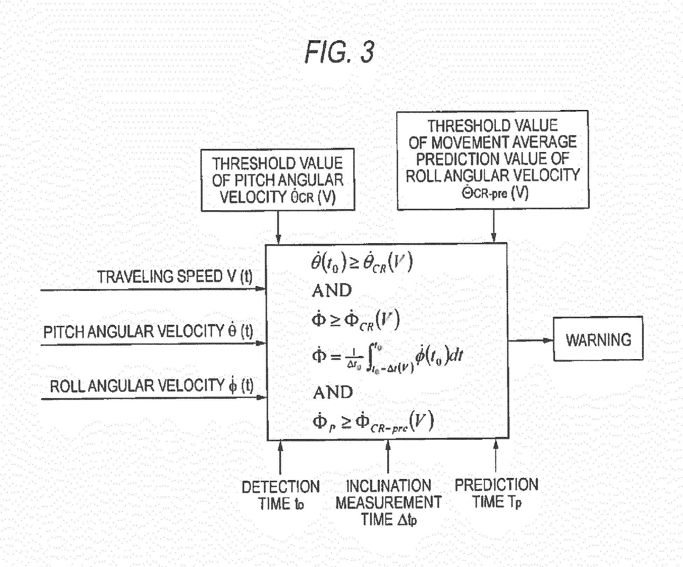

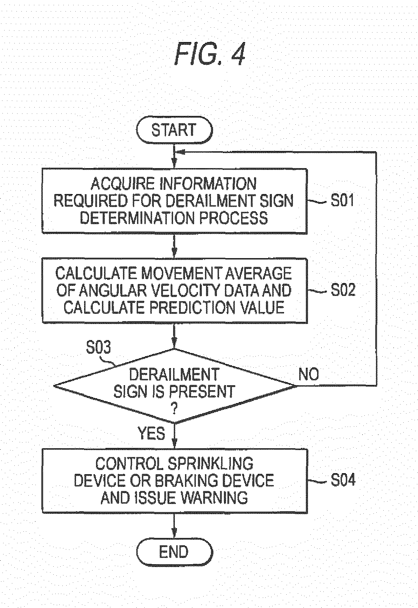

Next, a derailment sign determination process will be described below. FIG. 3 shows an algorithm for derailment sign detection. In addition, FIG. 4 shows a flow of a derailment sign determination process according to the embodiment. The derailment sign determination process is executed by the reading of the corresponding program stored in the memory 32 using the CPU 31 of the ECU 3.

At step S01, the CPU 31 acquires information required for the derailment sign determination process. The information includes the traveling speed, pitch angular velocity and roll angular velocity of the train 2. The CPU 31 can detect the traveling speed of the train 2 using the speed sensor 4. The CPU 31 can detect the pitch angular velocity and the roll angular velocity using the angular velocity sensor 5 provided on the bogie frame 25 of the bogie 22. The acquired traveling speed, pitch angular velocity and roll angular velocity are stored in the memory 32. The CPU 31 can detect the traveling speed, pitch angular velocity and roll angular velocity of the train, for example, every 0.005 sec. This detection timing is just an example and can be set appropriately. Hence, the traveling speed, pitch angular velocity and roll angular velocity to be acquired every 0.005 sec are stored sequentially in the memory 32, whereby the histories of the traveling speed, pitch angular velocity and roll angular velocity are created. A logic for making a correction for eliminating the influence of cants on the basis of the roll angular velocity and a logic for making a correction for eliminating the influence of rail joints on the basis of the pitch angular velocity are incorporated in a determination logic for executing the derailment sign determination process, whereby the influence of track irregularity on the derailment sign determination process can be eliminated. As a result, it is possible to determine whether not only a derailment sign during the traveling of the train 2 on straight rails but also a derailment sign during the traveling of the train 2 on curved rails is present. When the information required for the derailment sign determination process is acquired, the process advances to the next step,

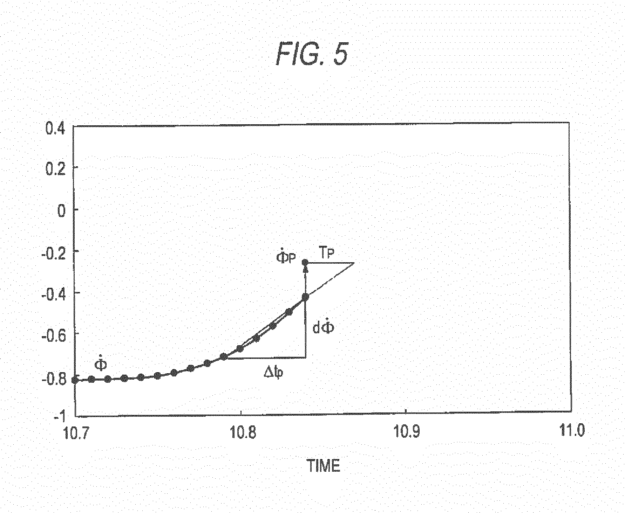

At step S02, the CPU 31 calculates a prediction value of the roll angular velocity after the lapse of a predetermined time on the basis of the history of the roll angular velocity. For example, the CPU 31 accesses the area of the memory 32 in which the roll angular velocity is stored, acquires a predetermined number of roll angular velocity values from the roll angular velocity values stored in the memory 32 in order from the newest value to an older value depending on the storage time (FIG. 5 indicates that the roll angular velocity values $\dot{\Phi}$ at five points included in an inclination measurement time $\Delta t_p$ are acquired), obtains a recent average inclination $\Delta\dot{\Phi}$ by integrating the roll angular velocity values and calculating the change amount (displacement amount) in the inclination measurement time, and calculates the movement average prediction value $\dot{\Phi}_p$ of the roll angular velocity after the lapse of a prediction time $T_p$ on the assumption that the recent average inclination is maintained constant. Expression 1 is an expression for calculating the prediction value of the roll angular velocity.

[Expression 1]

$$\dot{\Phi}_p = \dot{\Phi} + \Delta\dot{\Phi} \times T_p$$

$\dot{\Phi}_p$: movement average prediction value of roll angular velocity
$\dot{\Phi}$: current movement average value
$\Delta\dot{\Phi}$: recent average inclination
$T_p$: prediction time

The current movement average value can be calculated using Expression 2.

[Expression 2]

$$\dot{\Phi} = \frac{1}{\Delta t_p} \int_{t-\Delta t_p}^{t} \dot{\Phi}(t)dt$$

$\dot{\Phi}(t)$ : roll angular velocity

$\Delta t_p$: inclination measurement time

$$\Delta\dot{\Phi} = d\dot{\Phi}/\Delta t_p = \left(\dot{\Phi}(t) - \dot{\Phi}(t - \Delta t_p)\right)/\Delta t_p$$

The above is represented by a graph as shown in FIG. 5. FIG. 5 shows an example of a graph illustrating the relationship between a change amount and time. As shown in FIG. 5, the recent average inclination $\Delta\dot{\Phi}$ is obtained from the change amount (displacement amount, that is, $d\dot{\Phi}/t_p$) of the roll angular velocity $\dot{\Phi}$ at five time points included in the inclination measurement time $\Delta t_p$, and the movement average prediction value $\dot{\Phi}_p$ of the roll angular velocity after the lapse of the prediction time $T_p$ is calculated on the assumption that the recent average inclination is maintained constant. The movement average prediction value of the roll angular velocity calculated as described above is stored in the memory 32. After the movement average prediction value of the roll angular velocity is calculated as described above, the process advances to the next step.

At step S03, the CPU 31 determines whether a derailment sign is present. In the case that the prediction values of the pitch angular velocity and the roll angular velocity exceed preset threshold values respectively corresponding thereto, the CPU 31 determines that a derailment sign is present. The CPU 31 accesses the area of the memory 32 in which the pitch angular velocity is stored and acquires the pitch angular velocity. At this time, the CPU 31 accesses the newest value of the pitch angular velocity values stored in the memory 32. Although a case in which the CPU 31 acquires the pitch angular velocity stored in the memory 32 is described herein, it may be possible that the CPU 31 acquires the pitch angular velocity output from the angular velocity sensor 5.

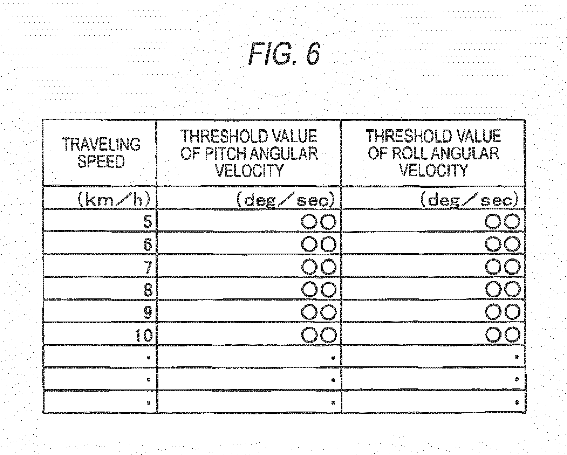

On the other hand, the CPU 31 accesses the area of the memory 32 in which the prediction value of the roll angular velocity is stored and acquires the prediction value of the roll angular velocity. The threshold values of the pitch angular velocity and the roll angular velocity can be set at each traveling speed as shown in FIG. 6 and stored in the memory 32 beforehand. Hence, the CPU 31 accesses the area of the memory 32 in which the threshold values are stored to acquire the respective threshold value corresponding to the traveling speed value.

The respective threshold values can be calculated by an experiment or a simulation in which the traveling speed of the train and the attribute parameters of the train have been set appropriately. The attribute parameters include the weight of the train, the number of the axles and the diameter of the wheel, for example. Each threshold value can be set as the lowest value of a physical amount obtained immediately after a wheel rises up onto the rail, in consideration of detection omission and erroneous detection. For example, each threshold value can be set for each of vehicle conditions and traveling conditions including the conditions that the rising amount of the left wheel of the first axle is 10 mm, the traveling speed is 10 km/h and the number of the revolutions of the wheel until the rising amount of the wheel reaches 10 mm is one.

In the case that the pitch angular velocity exceeds the threshold value of the pitch angular velocity and the prediction value of the roll angular velocity exceeds the threshold value of the roll angular velocity, the CPU 31 determines that a derailment sign is present. In this case, the process advances to step S04. On the other hand, in the case that the CPU 31 does not determine that a derailment sign is present, the process returns to step S01. Then, the CPU 31 acquires the traveling speed, pitch angular velocity and roll angular velocity of the train 2 at step S01 and recalculates and updates the movement average prediction value $\dot{\Phi}_p$ of the roll angular velocity at step S02, and performs the determination at step S03.

At step S04, the CPU 31 controls the water sprinkling device 9 to make the derailed train 2 return to the rails or controls the braking device 8 to stop the train 2. In addition, the detection of the derailment sign is indicated on the monitor 6 for warning. Furthermore, the detection of the derailment sign is output as sound through the speaker 7 for warning.

<<Effect>>

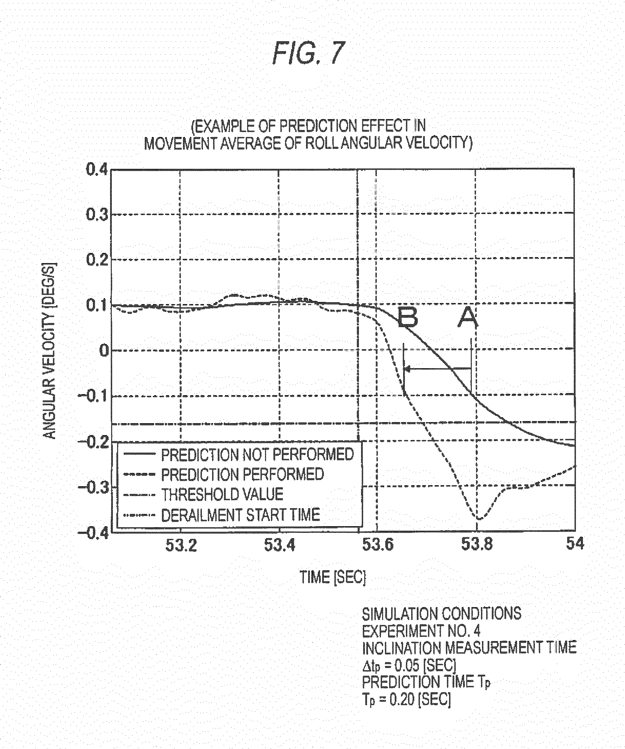

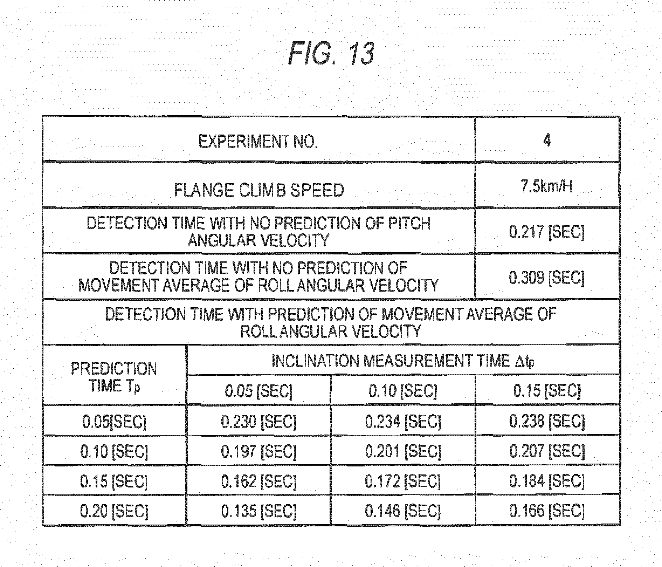

In the derailment sign detection system 1 according to the first embodiment, the prediction value of the roll angular velocity is calculated and it is determined whether a derailment sign of the train 2 is present on the basis of the prediction value of the roll angular velocity, whereby the time until the roll angular velocity exceeds the preset threshold value can be made shorter than ever. Hence, the presence of the derailment sign can be determined earlier. As a result, a dangerous state can be grasped beforehand, whereby the safety during the traveling of the train 2 can be improved. Consequently, the derailment of the train 2 can be prevented, and the breakage of the train and the railway tracks can be prevented. An example of the effect is shown in FIG. 7. The prediction effect in the case that the inclination measurement time is 0.05 sec and the prediction time is 0.20 sec is shown in FIG. 7, and the effect corresponds to Experiment No. 4 (see FIG. 13) of the simulation to be described later. According to FIG. 7, by the use of the prediction value of the roll angular velocity, the detection time of the derailment sign is shifted from point A to point B, thereby being shortened by approximately 100 ms.

<Simulation>

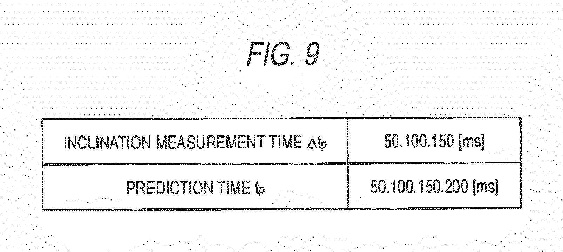

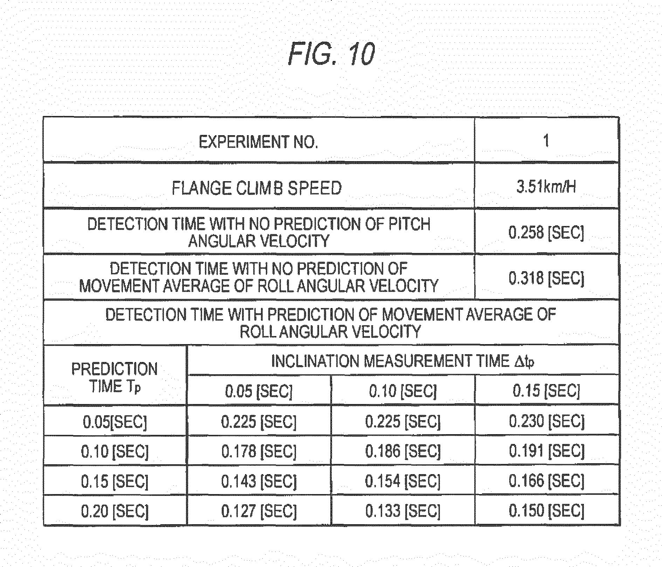

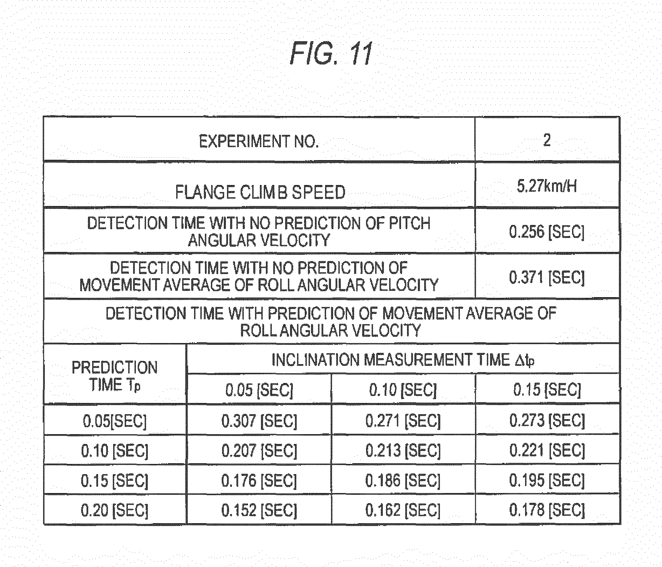

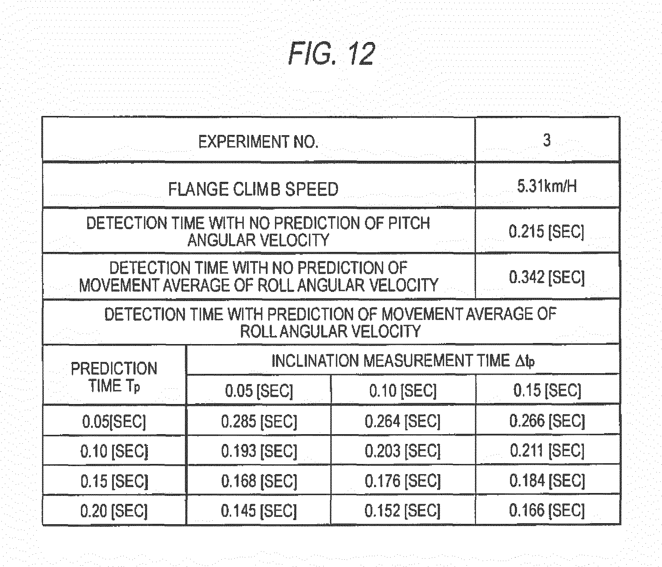

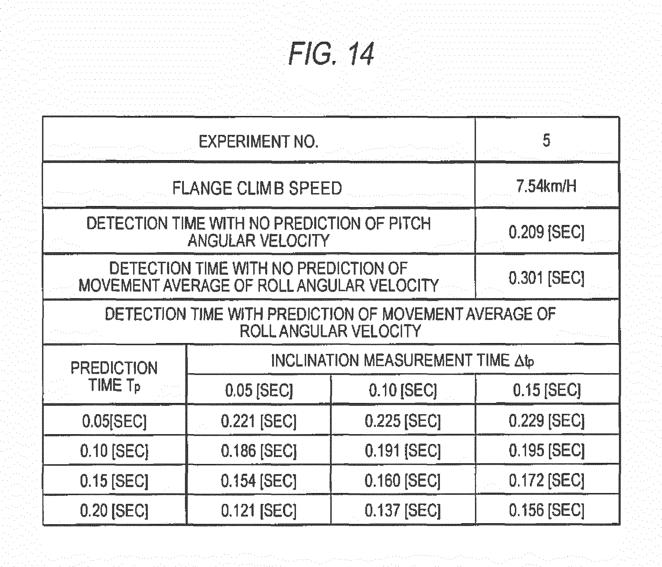

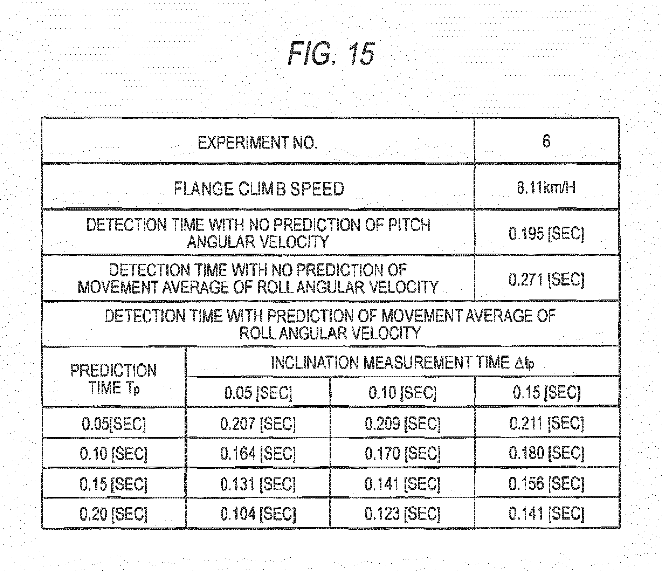

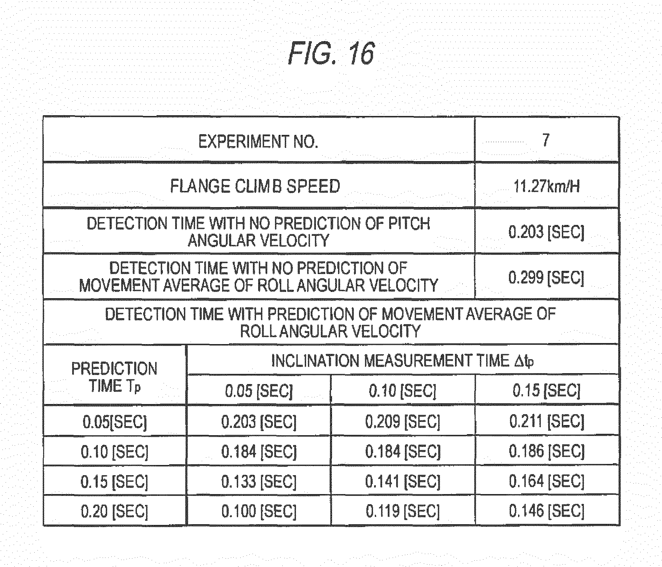

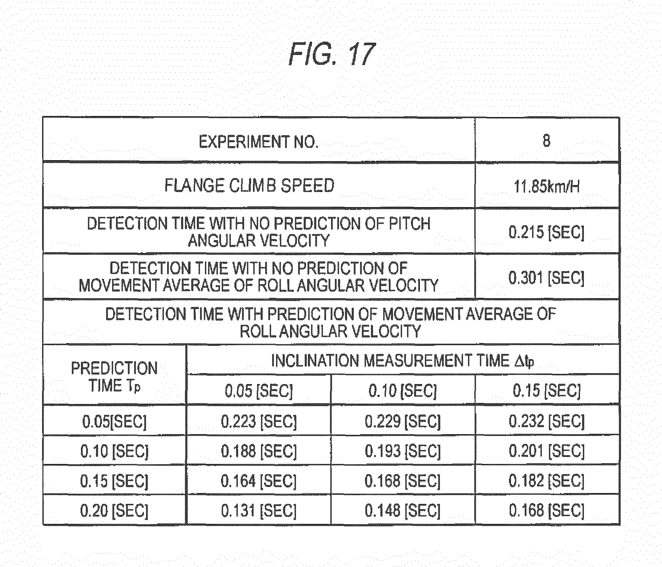

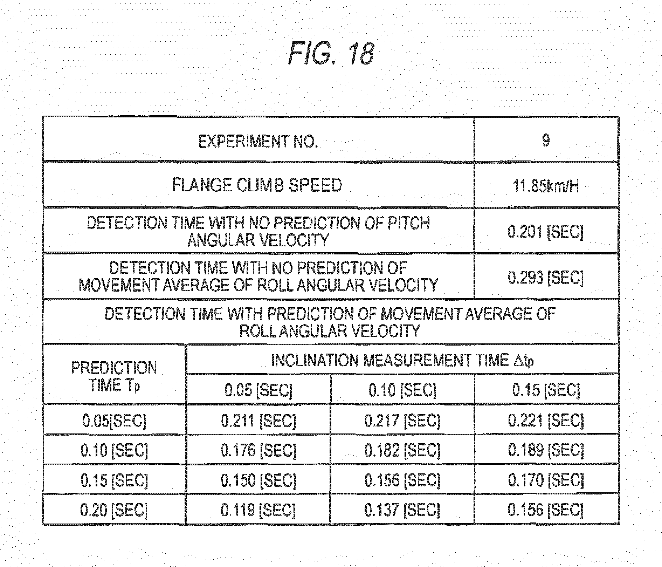

FIG. 9 shows parameter values for the simulation, and FIGS. 10 to 18 show verification results (1) to (9) of the detection time and show the detection time values in the case that the movement average prediction of the roll angular velocity is performed. On the assumption of an actual train, the simulation is performed at the inclination measurement time and the prediction time for sign prediction detection as shown in FIG. 10 to verify an optimal inclination measurement time and an optimal prediction time while the respective parameter values are changed. It can be confirmed that the detection time is slightly decreased by decreasing the inclination measurement time and that the detection time is decreased by increasing the prediction time as shown in FIGS. 10 to 18. It can also be confirmed that the detection time in the case that the inclination measurement time is set to 50 [ms] and that the prediction time is set to 200 [ms] is almost equal to the detection time required for detecting a derailment sign using the pitch angular velocity. As described above, it is preferable that the prediction time and the inclination measurement time should be set so that the detection time required for detecting a derailment sign using the prediction value of the roll angular velocity is nearly equal to the detection time required for detecting a derailment sign using the pitch angular velocity.

<Modification>

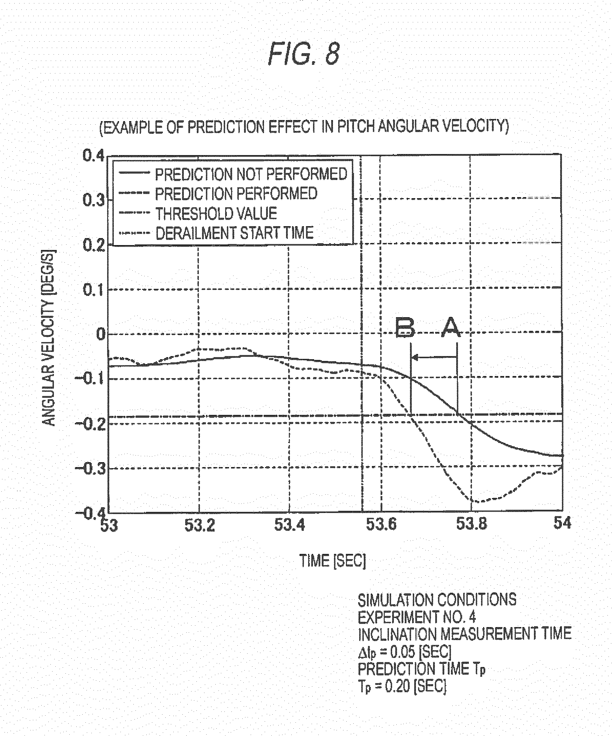

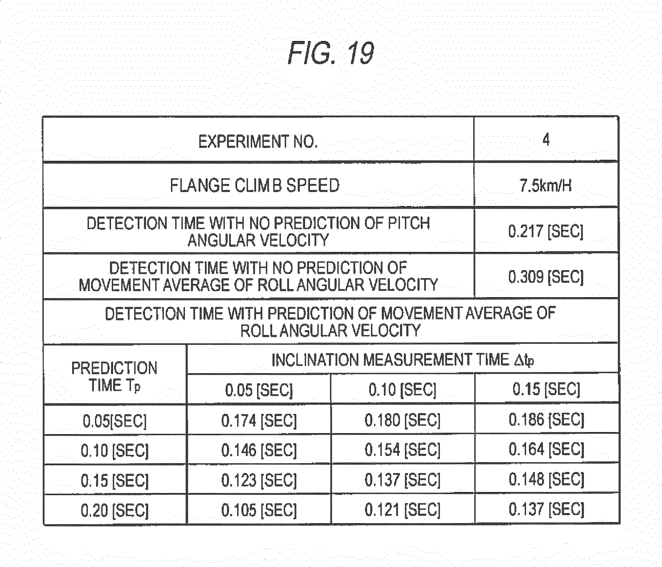

In the first embodiment, the prediction value of the roll angular velocity is calculated and a derailment sign is detected using the prediction value of the roll angular velocity; however, the prediction value of the pitch angular velocity after the lapse of a predetermined time may be calculated using the pitch angular velocity on the basis of the history of the pitch angular velocity and the prediction value may be used for the detection of a derailment sign. The prediction value of the pitch angular velocity can be calculated; for example, the CPU 31 accesses the area of the memory 32 in which the pitch angular velocity is stored, acquires a predetermined number of pitch angular velocity values in order from the newest value to an older value depending on the storage time, obtains a recent average inclination by integrating the pitch angular velocity values and calculating the change amount in the inclination measurement time, and calculates the prediction value of the pitch angular velocity after the lapse of a predetermined time on the assumption that the change in the calculated recent average inclination is maintained after the lapse of the predetermined time. FIG. 8 shows an example of a prediction effect in the pitch angular velocity. The prediction effect in the case that the inclination measurement time is 0.05 sec and the prediction time is 0.20 sec is shown in FIG. 8, and the effect corresponds to Experiment No. 4 (see FIG. 19) of the simulation. FIG. 19 shows the detection result (10) of the detection time and shows the detection time in the case that the prediction of the pitch angular velocity is performed. According to FIG. 8, by the use of the prediction value of the pitch angular velocity, the detection time of the derailment sign is shifted from point A to point B, thereby being shortened by approximately 50 ms.

The various contents described above can be combined without departing from the scope of the technological concept of the present invention.

The characteristics of the above-mentioned embodiment of the derailment sign detection system, control device, derailment sign detection method and derailment sign detection program according to the present invention will be briefly summarized and listed in the following items [1] to [6].

[1] A derailment sign detection system equipped with:

a detection section (angular velocity sensor 5) provided in a train and detecting a pitch angular velocity and a roll angular velocity of the train on traveling;
a control device (ECU 3) that makes a storage device (memory 32) store the roll angular velocity detected by the detection section, calculates a prediction value ($\dot{\Phi}_p$) of the roll angular velocity after a lapse of a prediction time ($T_p$) based on a history of the roll angular velocity, and determines that a derailment sign of the train is present in a case that the pitch angular velocity detected by the detection section and the prediction value of the roll angular velocity exceed preset threshold values respectively corresponding thereto: and
an output section (abnormality notifying means A) that transmits the derailment sign to an outside in a case that the control device determines that the derailment sign is present.

[2] The derailment sign detection system described in the item [1], wherein the control device calculates a change amount of the roll angular velocity in an inclination measurement time ($\Delta t_p$) and calculates a prediction value of the roll angular velocity after the lapse of the prediction time on an assumption that a change in the roll angular velocity is maintained after the lapse of the prediction time.

[3] The derailment sign detection system described in the item [2], wherein the prediction time and the inclination measurement time are set based on a time required until the pitch angular velocity exceeds the preset threshold value of the pitch angular velocity.

[4] The derailment sign detection system described in any one of the items [1] to [3], wherein the control device makes the storage device store the pitch angular velocity detected by the detection section, calculates a prediction value of the pitch angular velocity after the lapse of the prediction time based on a history of the pitch angular velocity, and determines that a derailment sign of the train is present in a case that the prediction value of the pitch angular velocity and the prediction value of the roll angular velocity exceed the preset threshold values respectively corresponding thereto.

[5] A control device (ECU 3) configured to:

make a storage device (memory 32) store a roll angular velocity of a bogie (22) detected by a detection section (angular velocity sensor 5) which is provided in a train and detects a pitch angular velocity and the roll angular velocity of the train on traveling;

calculate a prediction value of the roll angular velocity after a lapse of a prediction time ($T_p$) based on a history of the roll angular velocity, determines that a derailment sign of the train is present in a case that the pitch angular velocity of the bogie detected by the detection section and the prediction value of the roll angular velocity exceed preset threshold values respectively corresponding thereto; and

transmit the derailment sign to an outside in a case that the control device determines that the derailment sign is present.

[6] A derailment sign detection method in which a computer (ECU 3) executes a process including:

a prediction value calculating step (step S02) of making a storage device (memory 32) store a roll angular velocity of a bogie (22) detected by a detection section (angular velocity sensor 5) which is provided in a train and detects a pitch angular velocity and the roll angular velocity of the train on traveling, and calculating a prediction value of the roll angular velocity after a lapse of a prediction time ($T_p$) based on a history of the roll angular velocity;

a sign determination step (step S03) of determining that a derailment sign of the train is present in a case that the pitch angular velocity of the bogie detected by the detection section and the prediction value of the roll angular velocity calculated at the prediction value calculating step exceed preset threshold values respectively corresponding thereto; and

a transmitting step (step S04) of transmitting the derailment sign to an outside in a case that it is determined that the derailment sign is present at the sign determination step.

[7] A derailment sign detection program for making a computer (ECU 3) execute a process including:

a prediction value calculating step (step S02) of making a storage device (memory 32) store a roll angular velocity of a bogie (22) detected by a detection section (angular velocity sensor 5) which is provided in a train and detects a pitch angular velocity and the roll angular velocity of the train on traveling, and calculating a prediction value of the roll angular velocity after a lapse of a prediction time ($T_p$) based on a history of the roll angular velocity;

a sign determination step (step S03) of determining that a derailment sign of the train is present in a case that the pitch angular velocity of the bogie detected by the detection section and the prediction value of the roll angular velocity calculated at the prediction value calculating step exceed preset threshold values respectively corresponding thereto; and

a transmitting step (step S04) of transmitting the derailment sign to an outside in a case that it is determined that the derailment sign is present at the sign determination step.

Although the present invention has been described in detail referring to the specific embodiment, it is obvious to those skilled in the art that the present invention can be changed and modified variously without departing from the scope of the present invention. This application is based on Japanese Patent Application (patent application 2013-113265) filed on May 29, 2013.

Industrial Applicability

With the present invention, the presence of a derailment sign can be determined earlier than ever. The present invention exhibiting this advantage is useful in the field relating to a derailment sign detection system, a control device, a derailment sign detection method and a derailment sign detection program.

Reference Signs List

1    derailment sign detection system

2    train

3    ECU

4    speed sensor

5    angular velocity sensor

A    abnormality notifying means

B    abnormality avoiding means

**Claims**

1.  A derailment sign detection system comprising:

    a detection section (5) provided in a train (5) and detecting a pitch angular velocity and a roll angular velocity of the train (2) on traveling;
    a control device (3) that makes a storage device (32) store the roll angular velocity detected by the detection section (5), calculates a prediction value of the roll angular velocity after a lapse of a prediction time based on a history of the roll angular velocity, and determines that a derailment sign of the train (2) is present in a case that the pitch angular velocity detected by the detection section (5) and the prediction value of the roll angular velocity exceed preset threshold values respectively corresponding thereto; and
    an output section (A) that transmits the derailment sign to an outside in a case that the control device (3) determines that the derailment sign is present,
    **characterized in that**:
    the control device (3) calculates a change amount of the roll angular velocity in an inclination measurement time, and calculates the prediction value of the roll angular velocity after the lapse of the prediction time on an assumption that a change in the roll angular velocity is maintained after the lapse of the prediction time.

2.  The derailment sign detection system according to claim 1, wherein
    the prediction time and the inclination measurement time are set based on a time required until the pitch angular velocity exceeds the preset threshold value of the pitch angular velocity.

3.  The derailment sign detection system according to claim 1 or 2, wherein
    the control device (3) makes the storage device store the pitch angular velocity detected by the detection section (5), calculates a prediction value of the pitch angular velocity after the lapse of the prediction time based on a history of the pitch angular velocity, and determines that the derailment sign of the train (2) is present in a case that the prediction value of the pitch angular velocity and the prediction value of the roll angular velocity exceed the preset threshold values respectively corresponding thereto.

4.  A derailment sign detection method in which a computer executes a process comprising:

    a prediction value calculating step of making a storage device store a roll
    angular velocity of a bogie detected by a detection section (5) which is provided in a train (2) and detects a pitch angular velocity and the roll angular velocity of the train (2) on travelling, and calculating a prediction value of the roll angular velocity after a lapse of a prediction time based on a history of the roll angular velocity;
    a sign determination step of determining that a derailment sign of the train (2) is present in a case that the pitch angular velocity of the bogie detected by the detection section (5) and the prediction value of the roll angular velocity calculated at the prediction value calculating step exceed preset threshold values respectively corresponding thereto; and

a transmitting step of transmitting the derailment sign to an outside in a case that it is determined that the derailment sign is present at the sign determination step,

**characterized in that**:

the prediction value calculating step includes calculating a change amount of the roll angular velocity in an inclination measurement time, and calculating the prediction value of the roll angular velocity after the lapse of the prediction time on an assumption that a change in the roll angular velocity is maintained after the lapse of the prediction time.

**Patentansprüche**

1. Ein System zur Detektion von Entgleisungszeichen, enthaltend:

   einen Detektionsabschnitt (5), der in einem Zug (5) vorgesehen ist und eine Nickwinkelgeschwindigkeit und eine Rollwinkelgeschwindigkeit des Zuges (2) bei der Fahrt erfasst;
   eine Steuervorrichtung (3), die eine Speichervorrichtung (32) veranlasst, die von dem Detektionsabschnitt (5) erfasste Rollwinkelgeschwindigkeit zu speichern, einen Vorhersagewert der Rollwinkelgeschwindigkeit nach Ablauf einer Vorhersagezeit auf der Grundlage einer Historie der Rollwinkelgeschwindigkeit berechnet und bestimmt, dass ein Entgleisungszeichen des Zuges (2) in einem Fall vorliegt, in dem die von dem Detektionsabschnitt (5) erfasste Nickwinkelgeschwindigkeit und der Vorhersagewert der Rollwinkelgeschwindigkeit voreingestellte Schwellenwerte übersteigen bzw. diesen korrespondieren, und
   einen Ausgangsabschnitt (A), der das Entgleisungszeichen nach außen überträgt, wenn die Steuereinrichtung (3) feststellt, dass das Entgleisungszeichen vorhanden ist,
   **dadurch gekennzeichnet**:
   die Steuervorrichtung (3) einen Änderungsbetrag der Rollwinkelgeschwindigkeit in einer Neigungsmesszeit berechnet und den Vorhersagewert der Rollwinkelgeschwindigkeit nach dem Ablauf der Vorhersagezeit unter der Annahme berechnet, dass eine Änderung der Rollwinkelgeschwindigkeit nach dem Ablauf der Vorhersagezeit beibehalten wird.

2. Das System zur Detektion von Entgleisungszeichen nach Anspruch 1, wobei
   die Vorhersagezeit und die Neigungsmesszeit auf der Grundlage einer Zeit eingestellt werden, die erforderlich ist, bis die Neigungswinkelgeschwindigkeit den voreingestellten Schwellenwert der Nickwinkelgeschwindigkeit überschreitet.

3. Das System zur Detektion von Entgleisungszeichen nach Anspruch 1 oder 2, wobei
   die Steuervorrichtung (3) die Speichervorrichtung veranlasst, die von dem Detektionsabschnitt (5) erfasste Nickwinkelgeschwindigkeit zu speichern, einen Vorhersagewert der Nickwinkelgeschwindigkeit nach dem Ablauf der Vorhersagezeit auf der Grundlage einer Historie der Nickwinkelgeschwindigkeit berechnet und bestimmt, dass das Entgleisungszeichen des Zuges (2) in einem Fall vorliegt, in dem der Vorhersagewert der Nickwinkelgeschwindigkeit und der Vorhersagewert der Rollwinkelgeschwindigkeit die jeweils entsprechenden voreingestellten Schwellenwerte überschreiten bzw. diesen korrespondieren.

4. Ein Verfahren zur Detektion von Entgleisungszeichen, bei dem ein Computer einen Prozeß ausführt, der folgendes umfasst
   einen Vorhersagewert-Berechnungsschritt, bei dem eine Speichervorrichtung eine Rollwinkelgeschwindigkeit eines Drehgestells speichert, die von einem Detektionsabschnitt (5) erfasst wird, der in einem Zug (2) vorgesehen ist und eine Nickwinkelgeschwindigkeit und die Rollwinkelgeschwindigkeit des Zuges (2) während der Fahrt erfasst und einen Vorhersagewert der Rollwinkelgeschwindigkeit nach Ablauf einer Vorhersagezeit auf der Grundlage einer Historie der Rollwinkelgeschwindigkeit berechnet;
   einen Zeichendetektionsschritt zum Detektieren, dass ein Entgleisungszeichen des Zuges (2) in einem Fall vorhanden ist, in dem die durch den Detektionsabschnitt (5) erfasste Nickwinkelgeschwindigkeit des Drehgestells und der Vorhersagewert der Rollwinkelgeschwindigkeit, die bei dem Vorhersagewert-Berechnungsschritt berechnet wurden, voreingestellte Schwellenwerte übersteigen bzw. diesen jeweils entsprechen; und
   einen Übertragungsschritt zur Übertragung des Entgleisungszeichens nach außen für den Fall, dass festgestellt wird, dass das Entgleisungszeichen bei der Zeichendetektion vorhanden ist, **dadurch gekennzeichnet**:
   der Vorhersagewert-Berechnungsschritt das Berechnen eines Änderungsbetrages der Rollwinkelgeschwindigkeit

**EP 3 006 301 B1**

in einer Neigungsmesszeit und das Berechnen des Vorhersagewertes der Rollwinkelgeschwindigkeit nach dem Ablauf der Vorhersagezeit unter der Annahme einschließt, dass eine Änderung der Rollwinkelgeschwindigkeit nach dem Ablauf der Vorhersagezeit beibehalten wird.

**Revendications**

1. Système de détection de signe de déraillement comprenant :

   une section de détection (5) installée sur un train (5) et détectant une vélocité angulaire de tangage et une vélocité angulaire de roulis du train (2) en déplacement ;
   un dispositif de commande (3) qui fait stocker à un dispositif de stockage (32) la vélocité angulaire de roulis détectée par la section de détection (5), calcule une valeur de prédiction de la vélocité angulaire de roulis après un laps d'un temps de prédiction selon un historique de la vélocité angulaire de roulis, et détermine qu'un signe de déraillement du train (2) est présent dans un cas où la vélocité angulaire de tangage détectée par la section de détection (5) et la valeur de prédiction de la vélocité angulaire de roulis dépassent des valeurs de seuil prédéfinies correspondant respectivement à celles-ci ; et
   une section de sortie (A) qui transmet le signe de déraillement à un extérieur dans un cas où le dispositif de commande (3) détermine que le signe de déraillement est présent,
   **caractérisé en ce que** :
   le dispositif de commande (3) calcule une quantité de changement de la vélocité angulaire de roulis dans une durée de mesure d'inclinaison, et calcule la valeur de prédiction de la vélocité angulaire de roulis après le laps du temps de prédiction selon une hypothèse qu'un changement dans la vélocité angulaire de roulis est maintenu après le laps du temps de prédiction.

2. Le système de détection de signe de déraillement selon la revendication 1, dans lequel
   la durée de prédiction et la durée de mesure d'inclinaison sont définies selon une durée requise jusqu'à ce que la vélocité angulaire de tangage dépasse la valeur de seuil prédéfinie de la vélocité angulaire de tangage.

3. Le Système de détection de signe de déraillement selon la revendication 1 ou 2, dans lequel
   le dispositif de commande (3) fait stocker au dispositif de stockage la vélocité angulaire de tangage détectée par la section de détection (5), calcule une valeur de prédiction de la vélocité angulaire de tangage après le laps du temps de prédiction selon un historique de la vélocité angulaire de tangage, et détermine que le signe de déraillement du train (2) est présent dans un cas où la valeur de prédiction de la vélocité angulaire de tangage et la valeur de prédiction de la vélocité angulaire de roulis dépassent les valeurs de seuil prédéfinies correspondant respectivement à celles-ci.

4. Procédé de détection de signe de déraillement dans lequel un ordinateur exécute un traitement comprenant :

   une étape de calcul de valeur de prédiction qui entraîne un stockage par un dispositif de stockage d'une vélocité angulaire de roulis d'un bogie détectée par une section de détection (5) qui est installée dans un train (2) et détecte une vélocité angulaire de tangage et la vélocité angulaire de roulis du train (2) en déplacement, et un calcul d'une valeur de prédiction de la vélocité angulaire de roulis après un laps d'un temps de prédiction selon un historique de la vélocité angulaire de roulis ;
   une étape de détermination de signe de détermination qu'un signe de déraillement du train (2) est présent dans un cas où la vélocité angulaire de tangage du bogie détectée par la section de détection (5) et la valeur de prédiction de la vélocité angulaire de roulis calculée à l'étape de calcul de valeur de prédiction dépassent des valeurs de seuil prédéfinies correspondant respectivement à celles-ci ; et
   une étape de transmission de transmission du signe de déraillement à un extérieur dans un cas où il est déterminé que le signe de déraillement est présent à l'étape de détermination de signe,
   **caractérisé en ce que** :
   l'étape de calcul de valeur de prédiction inclut un calcul d'une quantité de changement de la vélocité angulaire de roulis dans une durée de mesure d'inclinaison, et un calcul de la valeur de prédiction de la vélocité angulaire de roulis après le laps du temps de prédiction selon une hypothèse qu'un changement dans la vélocité angulaire de roulis est maintenu après le laps du temps de prédiction.

## FIG. 1A

## FIG. 1B

## FIG. 2A

## FIG. 2B

## FIG. 3

THRESHOLD VALUE
OF MOVEMENT AVERAGE
PREDICTION VALUE OF
ROLL ANGULAR VELOCITY
$\dot{\Theta}$CR-pre (V)

THRESHOLD VALUE
OF PITCH ANGULAR
VELOCITY $\dot{\theta}$CR (V)

TRAVELING SPEED V (t)

PITCH ANGULAR VELOCITY $\dot{\theta}$ (t)

ROLL ANGULAR VELOCITY $\dot{\phi}$ (t)

$$\dot{\theta}(t_0) \geq \dot{\theta}_{CR}(V)$$

AND

$$\dot{\Phi} \geq \dot{\Phi}_{CR}(V)$$

$$\dot{\Phi} = \frac{1}{\Delta t_0} \int_{t_0 - \Delta t(V)}^{t_0} \dot{\phi}(t_0) dt$$

AND

$$\dot{\Phi}_P \geq \dot{\Phi}_{CR-pre}(V)$$

WARNING

DETECTION
TIME t₀

INCLINATION
MEASUREMENT
TIME Δt₀

PREDICTION
TIME Tp

## FIG. 4

```
              ( START )
                  │
                  ▼◄──────────────────┐
    ┌──────────────────────────┐      │
    │    ACQUIRE INFORMATION   │      │
    │ REQUIRED FOR DERAILMENT  │─ S01 │
    │   SIGN DETERMINATION     │      │
    │        PROCESS           │      │
    └──────────────────────────┘      │
                  │                    │
                  ▼                    │
    ┌──────────────────────────┐      │
    │ CALCULATE MOVEMENT AVERAGE│      │
    │ OF ANGULAR VELOCITY DATA  │─ S02 │
    │ AND CALCULATE PREDICTION  │      │
    │         VALUE            │      │
    └──────────────────────────┘      │
                  │                    │
      S03         ▼                    │
         ╲   ╱─────────╲    NO         │
          ╳ DERAILMENT   ╳─────────────┘
           ╲ SIGN IS    ╱
            ╲ PRESENT  ╱
             ╲   ?    ╱
              ╲──────╱
            YES │
                ▼
    ┌──────────────────────────┐
    │    CONTROL SPRINKLING     │
    │  DEVICE OR BRAKING DEVICE │─ S04
    │    AND ISSUE WARNING      │
    └──────────────────────────┘
                  │
                  ▼
              ( END )
```

## FIG. 5

## FIG. 6

| TRAVELING SPEED | THRESHOLD VALUE OF PITCH ANGULAR VELOCITY | THRESHOLD VALUE OF ROLL ANGULAR VELOCITY |
|---|---|---|
| (km/h) | (deg/sec) | (deg/sec) |
| 5 | ○○ | ○○ |
| 6 | ○○ | ○○ |
| 7 | ○○ | ○○ |
| 8 | ○○ | ○○ |
| 9 | ○○ | ○○ |
| 10 | ○○ | ○○ |
| . | . | . |
| . | . | . |
| . | . | . |

## FIG. 7

(EXAMPLE OF PREDICTION EFFECT IN
MOVEMENT AVERAGE OF ROLL ANGULAR VELOCITY)

SIMULATION CONDITIONS
EXPERIMENT NO. 4
INCLINATION MEASUREMENT TIME
$\Delta t_p$ = 0.05 [SEC]
PREDICTION TIME $T_p$
$T_p$ = 0.20 [SEC]

## FIG. 8

(EXAMPLE OF PREDICTION EFFECT IN PITCH ANGULAR VELOCITY)

SIMULATION CONDITIONS
EXPERIMENT NO. 4
INCLINATION MEASUREMENT TIME
$\Delta t_p = 0.05$ [SEC]
PREDICTION TIME $T_p$
$T_p = 0.20$ [SEC]

## FIG. 9

| INCLINATION MEASUREMENT TIME $\Delta t_p$ | 50.100.150 [ms] |
|---|---|
| PREDICTION TIME $t_p$ | 50.100.150.200 [ms] |

# FIG. 10

| EXPERIMENT NO. | | | 1 |
|---|---|---|---|
| FLANGE CLIMB SPEED | | | 3.51km/H |
| DETECTION TIME WITH NO PREDICTION OF PITCH ANGULAR VELOCITY | | | 0.258 [SEC] |
| DETECTION TIME WITH NO PREDICTION OF MOVEMENT AVERAGE OF ROLL ANGULAR VELOCITY | | | 0.318 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.225 [SEC] | 0.225 [SEC] | 0.230 [SEC] |
| 0.10 [SEC] | 0.178 [SEC] | 0.186 [SEC] | 0.191 [SEC] |
| 0.15 [SEC] | 0.143 [SEC] | 0.154 [SEC] | 0.166 [SEC] |
| 0.20 [SEC] | 0.127 [SEC] | 0.133 [SEC] | 0.150 [SEC] |

# FIG. 11

| EXPERIMENT NO. | | | 2 |
|---|---|---|---|
| FLANGE CLIMB SPEED | | | 5.27km/H |
| DETECTION TIME WITH NO PREDICTION OF PITCH ANGULAR VELOCITY | | | 0.256 [SEC] |
| DETECTION TIME WITH NO PREDICTION OF MOVEMENT AVERAGE OF ROLL ANGULAR VELOCITY | | | 0.371 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.307 [SEC] | 0.271 [SEC] | 0.273 [SEC] |
| 0.10 [SEC] | 0.207 [SEC] | 0.213 [SEC] | 0.221 [SEC] |
| 0.15 [SEC] | 0.176 [SEC] | 0.186 [SEC] | 0.195 [SEC] |
| 0.20 [SEC] | 0.152 [SEC] | 0.162 [SEC] | 0.178 [SEC] |

## FIG. 12

| EXPERIMENT NO. | | 3 | |
|---|---|---|---|
| FLANGE CLIMB SPEED | | 5.31km/H | |
| DETECTION TIME WITH NO PREDICTION OF PITCH ANGULAR VELOCITY | | 0.215 [SEC] | |
| DETECTION TIME WITH NO PREDICTION OF MOVEMENT AVERAGE OF ROLL ANGULAR VELOCITY | | 0.342 [SEC] | |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.285 [SEC] | 0.264 [SEC] | 0.266 [SEC] |
| 0.10 [SEC] | 0.193 [SEC] | 0.203 [SEC] | 0.211 [SEC] |
| 0.15 [SEC] | 0.168 [SEC] | 0.176 [SEC] | 0.184 [SEC] |
| 0.20 [SEC] | 0.145 [SEC] | 0.152 [SEC] | 0.166 [SEC] |

## FIG. 13

| EXPERIMENT NO. | | | 4 |
|---|---|---|---|
| FLANGE CLIMB SPEED | | | 7.5km/H |
| DETECTION TIME WITH NO PREDICTION OF PITCH ANGULAR VELOCITY | | | 0.217 [SEC] |
| DETECTION TIME WITH NO PREDICTION OF MOVEMENT AVERAGE OF ROLL ANGULAR VELOCITY | | | 0.309 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.230 [SEC] | 0.234 [SEC] | 0.238 [SEC] |
| 0.10 [SEC] | 0.197 [SEC] | 0.201 [SEC] | 0.207 [SEC] |
| 0.15 [SEC] | 0.162 [SEC] | 0.172 [SEC] | 0.184 [SEC] |
| 0.20 [SEC] | 0.135 [SEC] | 0.146 [SEC] | 0.166 [SEC] |

## FIG. 14

| EXPERIMENT NO. | | | 5 |
|---|---|---|---|
| FLANGE CLIMB SPEED | | | 7.54km/H |
| DETECTION TIME WITH NO PREDICTION OF PITCH ANGULAR VELOCITY | | | 0.209 [SEC] |
| DETECTION TIME WITH NO PREDICTION OF MOVEMENT AVERAGE OF ROLL ANGULAR VELOCITY | | | 0.301 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.221 [SEC] | 0.225 [SEC] | 0.229 [SEC] |
| 0.10 [SEC] | 0.186 [SEC] | 0.191 [SEC] | 0.195 [SEC] |
| 0.15 [SEC] | 0.154 [SEC] | 0.160 [SEC] | 0.172 [SEC] |
| 0.20 [SEC] | 0.121 [SEC] | 0.137 [SEC] | 0.156 [SEC] |

## FIG. 15

| EXPERIMENT NO. | | | 6 |
|---|---|---|---|
| FLANGE CLIMB SPEED | | | 8.11km/H |
| DETECTION TIME WITH NO PREDICTION OF PITCH ANGULAR VELOCITY | | | 0.195 [SEC] |
| DETECTION TIME WITH NO PREDICTION OF MOVEMENT AVERAGE OF ROLL ANGULAR VELOCITY | | | 0.271 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.207 [SEC] | 0.209 [SEC] | 0.211 [SEC] |
| 0.10 [SEC] | 0.164 [SEC] | 0.170 [SEC] | 0.180 [SEC] |
| 0.15 [SEC] | 0.131 [SEC] | 0.141 [SEC] | 0.156 [SEC] |
| 0.20 [SEC] | 0.104 [SEC] | 0.123 [SEC] | 0.141 [SEC] |

## FIG. 16

| EXPERIMENT NO. | | | 7 |
|---|---|---|---|
| FLANGE CLIMB SPEED | | | 11.27km/H |
| DETECTION TIME WITH NO PREDICTION OF PITCH ANGULAR VELOCITY | | | 0.203 [SEC] |
| DETECTION TIME WITH NO PREDICTION OF MOVEMENT AVERAGE OF ROLL ANGULAR VELOCITY | | | 0.299 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.203 [SEC] | 0.209 [SEC] | 0.211 [SEC] |
| 0.10 [SEC] | 0.184 [SEC] | 0.184 [SEC] | 0.186 [SEC] |
| 0.15 [SEC] | 0.133 [SEC] | 0.141 [SEC] | 0.164 [SEC] |
| 0.20 [SEC] | 0.100 [SEC] | 0.119 [SEC] | 0.146 [SEC] |

EP 3 006 301 B1

## FIG. 17

| EXPERIMENT NO. | | | 8 |
|---|---|---|---|
| FLANGE CLIMB SPEED | | | 11.85km/H |
| DETECTION TIME WITH NO PREDICTION OF PITCH ANGULAR VELOCITY | | | 0.215 [SEC] |
| DETECTION TIME WITH NO PREDICTION OF MOVEMENT AVERAGE OF ROLL ANGULAR VELOCITY | | | 0.301 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.223 [SEC] | 0.229 [SEC] | 0.232 [SEC] |
| 0.10 [SEC] | 0.188 [SEC] | 0.193 [SEC] | 0.201 [SEC] |
| 0.15 [SEC] | 0.164 [SEC] | 0.168 [SEC] | 0.182 [SEC] |
| 0.20 [SEC] | 0.131 [SEC] | 0.148 [SEC] | 0.168 [SEC] |

## FIG. 18

| EXPERIMENT NO. | | | 9 |
|---|---|---|---|
| FLANGE CLIMB SPEED | | | 11.85km/H |
| DETECTION TIME WITH NO PREDICTION OF PITCH ANGULAR VELOCITY | | | 0.201 [SEC] |
| DETECTION TIME WITH NO PREDICTION OF MOVEMENT AVERAGE OF ROLL ANGULAR VELOCITY | | | 0.293 [SEC] |
| DETECTION TIME WITH PREDICTION OF MOVEMENT AVERAGE OF ROLL ANGULAR VELOCITY | | | |
| PREDICTION TIME Tp | INCLINATION MEASUREMENT TIME Δtp | | |
| | 0.05 [SEC] | 0.10 [SEC] | 0.15 [SEC] |
| 0.05[SEC] | 0.211 [SEC] | 0.217 [SEC] | 0.221 [SEC] |
| 0.10 [SEC] | 0.176 [SEC] | 0.182 [SEC] | 0.189 [SEC] |
| 0.15 [SEC] | 0.150 [SEC] | 0.156 [SEC] | 0.170 [SEC] |
| 0.20 [SEC] | 0.119 [SEC] | 0.137 [SEC] | 0.156 [SEC] |

## FIG. 19

| EXPERIMENT NO. | | | 4 |
|---|---|---|---|
| FLANGE CLIMB SPEED | | | 7.5km/H |
| DETECTION TIME WITH NO PREDICTION OF PITCH ANGULAR VELOCITY | | | 0.217 [SEC] |
| DETECTION TIME WITH NO PREDICTION OF MOVEMENT AVERAGE OF ROLL ANGULAR VELOCITY | | | 0.309 [SEC] |
| DETECTION TIME WITH PREDICTION OF MOVEMENT AVERAGE OF ROLL ANGULAR VELOCITY | | | |
| PREDICTION TIME $T_p$ | INCLINATION MEASUREMENT TIME $\Delta t_p$ | | |
| | 0.05 [SEC] | 0.10 [SEC] | 0.15 [SEC] |
| 0.05[SEC] | 0.174 [SEC] | 0.180 [SEC] | 0.186 [SEC] |
| 0.10 [SEC] | 0.146 [SEC] | 0.154 [SEC] | 0.164 [SEC] |
| 0.15 [SEC] | 0.123 [SEC] | 0.137 [SEC] | 0.148 [SEC] |
| 0.20 [SEC] | 0.105 [SEC] | 0.121 [SEC] | 0.137 [SEC] |

**EP 3 006 301 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010064453 A1
- JP 2004255979 A
- WO 2010064453 A
- JP 2013113265 A